# EUROPÄISCHE PATENTSCHRIFT

(11) **EP 0 837 300 B1**
(45) Veröffentlichungstag und Bekanntmachung des Hinweises auf die Patenterteilung: **09.07.2003**
(21) Anmeldenummer: 97116333.2
(22) Anmeldetag: 19.09.1997
(51) Int. Cl.: G01B 11/00, G01B 11/02

(54) **Verfahren und Vorrichtung zur Vermessung von Werkstückkanten**
Procedure and apparatus for measuring the edges of objects
Procédé et appareil pour mesurer des bordures d'objets

(30) Priorität: 21.10.1996 DE 19643315; 23.12.1996 DE 19654067
(43) Veröffentlichungstag der Anmeldung: 22.04.1998
(73) Patentinhaber: Carl Zeiss, 89518 Heidenheim (Brenz) (DE); Carl-Zeiss-Stiftung, trading as Carl Zeiss, 89518 Heidenheim (Brenz) (DE)
(72) Erfinder: Breyer, Karl-Hermann, Dr., 89518 Heidenheim (DE); Götz, Klaus-Dieter, 74372 Sersheim (DE); Beck, Rolf, 73728 Esslingen (DE)

(56) Entgegenhaltungen:
- EP-A- 0 532 169
- EP-A- 0 726 445
- DE-A- 2 405 102
- DE-A- 4 109 483
- DE-A- 19 736 588
- US-A- 4 623 797
- US-A- 5 329 359
- US-A- 5 412 420

## Beschreibung

Die Erfindung betrifft ein Verfahren zur Messung der Kanten von zu vermessenden Werkstücken mit einem optischen Taster, der den Abstandswert zwischen dem Taster und der Werkstückoberfläche an einem einstellbaren Abtastpunkt mißt.

Ein besagtes Verfahren ist beispielsweise aus der DE 41 09 483 A1 bekannt. Dieses ist insbesondere dazu vorgesehen, um Kanten und Bohrungen bei zu vermessenden Werkstücken, wie beispielsweise Fahrzeugkarosserieteilen, zu ermitteln. Dazu wird in der Druckschrift ein optischer Triangulationstaster vorgeschlagen, der den Abstand des Tasters zur Werkstückoberfläche mißt und zur Messung eines Punktes der Kante über die zu vermessende Kante hinweggeführt wird. Ergibt sich in den hierbei gemessenen Abstandswerten ein plötzlicher Sprung, so deutet dies darauf hin, daß der optische Taster in diesem Moment eine Kante überfährt, so daß aus den entsprechenden Abstandswerten und den Maschinenpositionen die Position eines Punktes der Kante ermittelt werden kann.

Um den optischen Taster geeignet über die Oberfläche des Werkstückes bewegen zu können, ist dieser an einer Mimik eines Koordinatenmeßgerätes aufgehängt, über die dieser in drei aufeinander senkrecht stehenden Richtungen bewegt werden kann. Zusätzlich ist der optische Taster über eine Dreh-Schwenkeinheit mit der Mimik verbunden, so daß dieser zusätzlich um zwei aufeinander senkrecht stehende Achsen gedreht werden kann. Hierdurch kann der Abtaststrahl des Tasters immer geeignet auf die Oberfläche des zu vermessenden Werkstückes eingestellt werden.

Die Besonderheit des hierin gezeigten Verfahrens ist darin zu sehen, daß die Genauigkeit des bestimmten Punktes der Kante davon abhängt, wie dicht die nacheinander aufgenommenen Abtastpunkte beieinander liegen. Um hohe Genauigkeiten zu erzielen muß der optische Taster sehr dicht beieinander liegende Meßpunkte aufnehmen. Da der Zentralrechner des Koordinatenmeßgerätes die gesamte Auswertung der durch den Taster aufgenommenen Meßwerte übernimmt, sind bei hoher Meßgenauigkeit nur relativ geringe Meßgeschwindigkeiten möglich. Außerdem können Unregelmäßigkeiten in der Kante das Meßergebis stark verfälschen. Wird die Bahn des Abtastpunktes beispielsweise über eine Stelle geführt, an der sich eine Unregelmäßigkeit in Form eines Grates befindet, so kann dies das Ergebnis des gemessenen Punktes der, Kante stark verfälschen.

Es sind ferner aus dem Stand der Technik sogenannte Linientaster bekannt, die ähnlich dem aus der DE 41 09 483 A1 bekannten Triangulationstaster eingesetzt werden. Der Unterschied gegenüber dem Triangulationstaster ist bei diesen Linientastern darin zu sehen, daß der Abtastpunkt im Linientaster zusätzlich entlang einer Geraden kontinuierlich hin und her bewegt wird. Die Erfassung einer Kante erfolgt hierbei, indem der Abtastpunkt des Linientasters mit seiner Lininienrichtung senkrecht über die Kante geführt wird. Analog wird die Kante detektiert, indem in den abgetasteten Abstandswerten erstmalig eine sprunghafte Änderung detektiert wird.

Für den gezeigten Linientaster gelten hierbei genau dieselben Besonderheiten, wie für den Triangulationstaster aus der DE 41 09 483 A1.

Die US 5,329,359 zeigt einen ähnlichen Linientaster zur Überprüfung von mit elektrischen Bauteilen bestückten Leiterplatinen, bei dem ein frequenzmodulierter Laserstrahl in einen Referenzstrahl und einen Abtaststrahl aufgeteilt wird, wobei der Abtaststrahl durch einen Spiegel linienförmig über die Bauteile einer Platine geführt wird. Aus der Phasendifferenz des reflektierten Abtaststrahls gegenüber dem Referenzstrahl kann der Abstand zwischen dem Linientaster und dem elektrischen Bauteil bzw. der Platine ermittelt werden. Aus einer Änderung des Abstandes kann dann eine Kante des Bauteils bestimmt werden.

Um die Ausrichtung eines Bauteils zu bestimmen, werden die Kanten des Bauteils, wie eben beschrieben, entlang zweier zueinander paralleler Linien gemessen und aus den sich hieraus ergebenden Kantenübergängen die Lage des Bauteils bestimmt.

Ferner ist aus der DE 24 05 102 A1 ein Taster bekannt, mit dem ebenfalls Kanten vermessen werden können. Der Taster ist hierbei derart ausgelegt, daß ein Lichtstrahl auf einer Kreisbahn über die Kante des zu vermessenden Werkstückes hinweggeführt wird, wobei rückwärtig auf der gegenüberliegenden Seite des Werkstückes ein Photodetektor angeordnet ist. Aus den gemessenen Hell- und Dunkelzeiten des Photodetektors lassen sich die Schnittpunkte der Kreisbahn des Lichtpunktes mit der Kante und somit die Lage der Kante ermitteln.

Auch bei dem in der DE 24 05 102 A1 gezeigten Verfahren gelten die Besonderheiten, wie diese bereits im Zusammenhang mit der DE 41 09 483 A1 geschildert wurden.

Aufgabe der vorliegenden Erfindung ist es hiervon ausgehend ein Verfahren und ein Koordinatenmeßgerät zur Vermessung von Kanten an Werkstücken anzugeben, mit dem bei hoher Meßgeschwindigkeit exaktere Werte für gemessene Punkte der Kante bestimmt werden können.

Die Aufgabe wird gemäß den Merkmalen der Ansprüche 1 und 14 gelöst.

Der Grundgedanke der Erfindung ist darin zu sehen, daß der Abtastpunkt entlang einer Bahn derart über die Kante hinwegbewegt wird, so daß die Kante in einer Vielzahl von nebeneinander liegenden Punkten geschnitten wird, wobei aus der Vielzahl der Abstandswerte die Schnittpunkte zwischen der Bahn und der Kante ermittelt werden und hieraus z.B. über Interpolation, genan ein Punkt der Kante ermittelt wird.

Es sei an dieser Stelle darauf hingewiesen, daß der Begriff "Bahn, die die Kante in einer Vielzahl von nebeneinander liegenden Punkten schneidet" auch durch den im folgenden verwendeten Begriff "flächige Bahn" ausgedrücht werden kann.

Der besondere Vorteil dieses Verfahrens ist darin zu sehen, daß bei dem Verfahren des Abtastpunktes in einer flächigen Bahn über die Kante hinweg eine Vielzahl von Abstandswerten aufgenommen werden, die die Kante auch neben dem eigentlich zu vermessenden Punkt der Kante vermessen, so daß Unregelmäßigkeiten im eigentlich zu messenden Punkt der Kante gut ausgeglichen werden können.

Die flächige Bahn weist hierbei vorzugsweise eine gekrümmte Form auf, die geschlossene, sich periodisch wiederholende Muster zeigt. Eine Möglichkeit um die besagte gekrümmte Bahn zu erzeugen besteht beispielsweise darin, einen in der deutschen Patentanmeldung DE 197 36 588 (mit innerer Priorität DE 196 34 785.8) beschriebenen Ringtaster zu verwenden, dessen Abtastpunkt durch den Taster selbst kreisringförmig bewegt werden kann. Die Kontur eines vollständigen kreisförmigen Umlaufes des Abtastpunktes soll im folgenden mit Tastkreis bezeichnet werden. Die Abtastung kann hierbei derart erfolgen, daß der Taster an einer Stelle angeordnet wird und der Abtastpunkt einen vollständigen Umlauf auf seinem Tastkreis macht und hierbei die gemessenen Abstandswerte speichert. Nach einem vollständigen Umlauf wird der Taster dann um einen konstanten Versatz senkrecht auf die Kante zubewegt um hier wieder einen Umlauf zu machen usw.. Die Bahn weist dann eine Vielzahl von nacheinander senkrecht auf die Kante zu versetzten Kreisen auf. Natürlich kann der Ringtaster auch mit einer konstanten Geschwindigkeit auf die Kante zubewegt werden, so daß sich durch die Überlagerung der kreisförmigen Bewegung des Abtastpunktes im Taster und andererseits der translatorischen Bewegung des Tasters eine Zykloide ergibt.

Selbstverständlich muß die flächige Bahn nicht so ausgestaltet sein, wie dies eben beschrieben wurde. Beispielsweise wäre auch eine Bahn denkbar, bei der der Abtastpunkt in anderen geometrischen Figuren wie beispielsweise Dreiecken oder Vierecken über die Kante verfahren wird. Auch zur Erzeugung der flächigen Bahn kommen unterschiedliche Taster in Betracht. Beispielsweise sind natürlich auch Taster möglich, bei denen der zur Abtastung notwendige Abtaststrahl über einen Spiegel in der entsprechenden gewünschten geometrischen Form über die Oberfläche bewegt wird oder ein einfacher Triangulationstaster, wie er aus der DE 41 09 483 A1 bekannt ist, wobei hierbei die flächige Bahn durch entsprechende Steuerung der Mimik des Koordinatenmeßgerätes erzeugt wird.

Auch zur Ermittlung des zu messenden Punktes der Kante über Interpolation aus den gespeicherten Abständen gibt es unterschiedliche Möglichkeiten. So besteht eine Möglichkeit darin, aus den gespeicherten Abstandswerten unterschiedliche Positionen für die Kante zu ermitteln und über Mittelung der vielen Kantenpositionen einen Punkt der Kante zu bestimmen. Die Interpolation erfolgt hier durch die besagte Mittelung. Zur Bestimmung der Kantenpositionen kann hierbei derart vorgegangen werden, daß aus jeder sprunghaften Änderung der Abstandswerte auf das Überstreichen der Kante geschlossen wird. Hierdurch kann ein Zeitsignal abgeleitet werden, das festlegt, zu welchem Zeitpunkt die entsprechenden Maschinenpositionen, wie beispielsweise Position des Tasters in den drei aufeinander senkrecht stehenden Meßrichtungen (X, Y, Z), Winkel der Dreh-Schwenkeinheit (α, β) etc. übernommen werden sollen. Aus den Maschinenpositionen können dann die entsprechenden Kantenpositionen ermittelt werden, über die dann gemittelt wird. Dies kann entweder in Echtzeit passieren oder aber im nachhinein, wobei die entsprechenden Maschinenpositionen dann über einen längeren Zeitraum in einem geeigneten Speicher gespeichert werden müssen.

Bei einer weiteren Möglichkeit zur Bestimmung des Punktes der Kante über Interpolation, bei der die Meßgeschwindigkeit gegenüber dem Vorhergehend beschriebenen Verfahren stark erhöht werden kann, wird, wie weiter unten noch beschrieben wird, aus dem Verlauf der Abstandswerte über Interpolation ein einziges Zeitsignal abgeleitet, das einen Zeitpunkt festlegt, zu dem der Taster gegenüber der Kante eine festdefinierte Stellung einnimmt. Das Zeitsignal legt ebenfalls fest, zu welchem Zeitpunkt Maschinenpositionen zur Bestimmung des Punktes der Kante übernommen werden sollen. Bei einem Ringtaster beispielsweise kann die festdefinierte Stellung so aussehen, daß sich der Mittelpunkt des Tastkreises genau oberhalb der zu vermessenden Kante befindet. Die Verkürzung der Meßzeit ergibt sich dadurch, daß nur noch einmal pro Messung eines Punktes der Kante die Maschinenpositionen bestimmt werden müssen. Aus den betreffenden Maschinenpositionen und der bekannten Stellung des Tasters gegenüber der Kante kann dann einfach der Punkt der Kante bestimmt werden.

Die Meßgeschwindigkeit des eben beschriebenen Verfahrens kann weiter erhöht werden, indem das Zeitsignal bereits im Taster bestimmt wird. Der besondere Vorteil ergibt sich dadurch, daß sowohl die Schnittstelle zwischen dem Taster und einem Zentralrechner des Koordinatenmeßgerätes, sowie auch der Zentralrechner selber nicht mehr mit der Vielzahl an gemessenen Abstandswerte belastet werden, sondern stattdessen neben einigen wenigen anderen Signalen nur das Zeitsignal übermittelt wird.

In einer besonders Vorteilhaften Ausführungsform mit besonders hohen Meßgeschwindigkeiten wird das Koordinatenmeßgerät in einem festgelegten Zeittakt betrieben. Das Zeitsignal kann dann hierbei ein sogenanntes Taktabstandssignal umfassen, das angibt, wieviele Takte vorher der Taster die festdefinierte Stellung gegenüber der Kante eingenommen hat, und ein Triggersignal, das den Zeitpunkt festlegt, zu dem die Stellung um die Anzahl der Takte gemäß dem Taktabstandssignal zurückliegt. Durch ein derartiges Zeitsignal können im Zentralrechner sehr einfach die besagten Maschinenpositionen bestimmt werden, so daß auf zeitaufwendige Rechenoperationen verzichtet werden kann.

Das besagte Zeitsignal kann hierbei auf unterschiedlichste Art und Weise bestimmt werden. In einem besonders vorteilhaften Ausführungsbeispiel werden aus sprunghaften Änderungen der Abstandswerte Kantenübergänge detektiert, wobei aus den Kantenübergängen dann eine Vielzahl von zeitlich abhängigen Winkel ermittelt werden, die in Abhängigkeit von der Zeit angeben, welchen Winkel die gedachte Verbindung der Kantenübergänge mit einem festgelegten Referenzpunkt zu einer anderen Geraden einnimmt. Bei dem besagten Ringtaster kann dies beispielsweise der Winkel sein, der sich zwischen den detektierten Kantenübergängen eines Umlaufes und dem Mittelpunkt des Tastkreises ergibt. Selbstverständlich läßt sich dieses Prinzip auf sämtliche anderen Bahnen übertragen. Z.B. könnte bei einer Bahn die Dreiecke enthält als Winkel der Winkel zwischen den detektierten Kantenpositionen eines Umlaufes und dem Schwerpunkt des Dreieckes sein.

Aus den betreffenden zeitlich abhängigen Winkeln wird dann nachträglich zur Bestimmung des Punktes der Kante über Interpolation das besagte Zeitsignal abgeleitet, indem derjenige Zeitpunkt ermittelt wird, zu dem der zeitlich abhängige Winkel einen festdefinierten Wert einnimmt. Bei dem oben genannten Beispiel mit dem Ringtaster beträgt der Winkel 180° wenn sich der Mittelpunkt des Tastkreises über der Kante befindet.

Das besagte Zeitsignal kann insbesondere dann sehr genau bestimmt werden, wenn es aus dem Verlauf einer an die Winkel approximierten Funktion bestimmt wird, wobei durch die Approximation dann die Interpolation durchgeführt wird.

Weitere Vorteile und Weiterbildungen der Erfindung ergeben sich aus den Figuren. Hierin zeigen:
- Fig. 1: ein erfindungsgemäßes Koordinatenmeßgerät, mit dem das erfindungsgemäße Verfahren durchgeführt werden kann;
- Fig. 2: eine vergrößerte Schnittdarstellung des Tasters gemäß Figur 1;
- Fig. 3: ein Blockschaltbild wichtiger elektronischer Komponenten des Koordinatenmeßgerätes gemäß Figur 1;
- Fig. 4: eine Bahnbewegung des Abtastpunktes vom Taster gemäß Figuren 1 und 2;
- Fig. 5: Darstellung der ermittelten Winkel mit einem Taster gemäß Figuren 1 und 2 beim Verfahren über eine Kante;
- Fig. 6: eine Auswertung der Signale gemäß Figur 5;
- Fig. 7: eine Darstellung des Zeitsignals;
- Fig. 8: ein Fourierprofil der Abstandsmeßwerte des Tasters gemäß Figuren 1 und 2 vor der Überfahrt über die Kante;
- Fig. 9 und 10: eine Einpassung zur Erkennung des vermessenen Kantentyps.

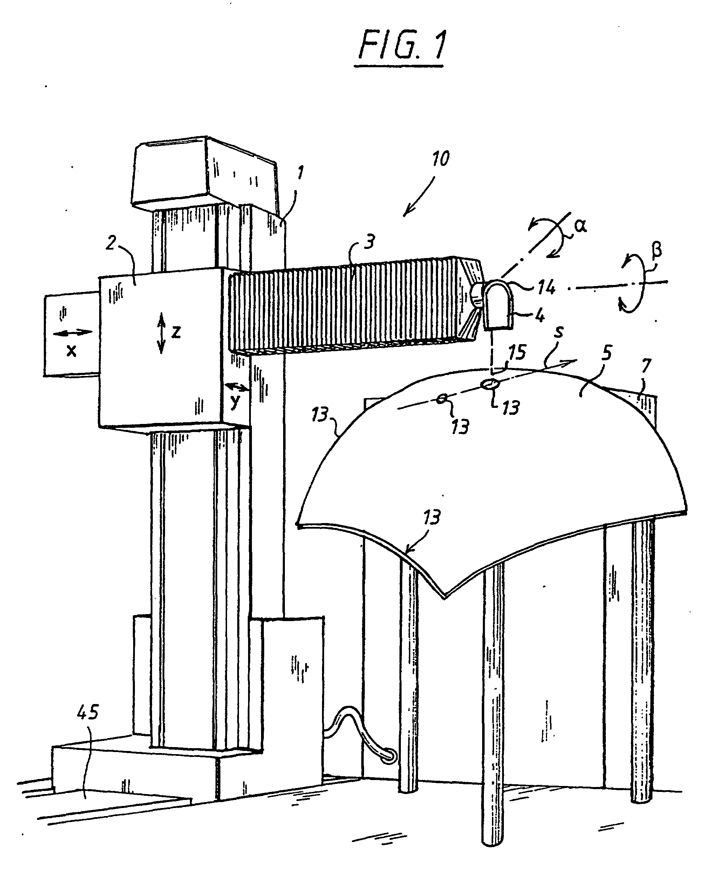

Figur 1 zeigt ein erfindungsgemäßes Koordinatenmeßgerät (10) zur Vermessung der Kanten (13) eines Werkstückes (5). Das Koordinatenmeßgerät umfaßt einen optischen Taster (4) der an unterschiedlichen Abtastpunkten (15) den Abstand (a) zwischen dem Taster (4) und der Werkstückoberfläche des Werkstückes (5) ermittelt. Zur Verstellung des Abtastpunktes (15) ist der Taster (4) über eine aus dem Stand der Technik bereits hinreichend bekannte Dreh-Schwenkeinheit (14) mit einem Meßarm (3) verbunden, wobei der optische Taster (4) gemäß dem Pfeil (β) um die Längsachse des Meßarms (3) rotiert werden kann sowie zusätzlich gemäß dem Pfeil (α) um eine zur Längsachse des Meßarmes (3) senkrecht stehende Querachse. Der Meßarm (3) ist über einen Schlitten (2) derart mit einem Ständer (1) verbunden, daß der Meßarm (3) gegenüber dem Ständer (1) sowohl in X-Richtung (X) wie auch in Z-Richtung (Z) bewegt werden kann. Der Ständer (1) seinerseits kann über eine Führung (45) in Y-Richtung (Y) bewegt werden. Um das zu vermessende Werkstück (5) vermessen zu können sind in dem besagten Koordinatenmeßgerät (10) für alle drei Meßrichtungen (X, Y, Z) Meßwerterfassungen (51) vorgesehen, über die sich die aktuelle Maschinenposition (X, Y, Z) des Tasters (4) in allen drei Meßrichtungen (X, Y, Z) ermitteln läßt. Dazu sind üblicherweise hier nicht näher gezeigte, aus dem Stand der Technik bereits hinreichend bekannte Glasmaßstäbe vorgesehen, die von entsprechenden Sensoren abgetastet werden. In ähnlicher Weise weist auch die Dreh-Schwenkeinheit (14) Meßwerterfassungen (51) auf, die einen Glasstab abtasten um hierdurch die Maschinenposition (α, β) des Tasters (4) in Bezug auf den Winkel (β), wie auch den Winkel (α) aufzunehmen. Die entsprechenden Maschinenpositionen (X, Y, Z, α, β) werden über eine entsprechende Schnittstelle zur Weiterverarbeitung an den Steuerschrank (7) übermittelt, in dem sich unter anderem auch ein Zentralrechner des Koordinatenmeßgerätes (10) befindet.

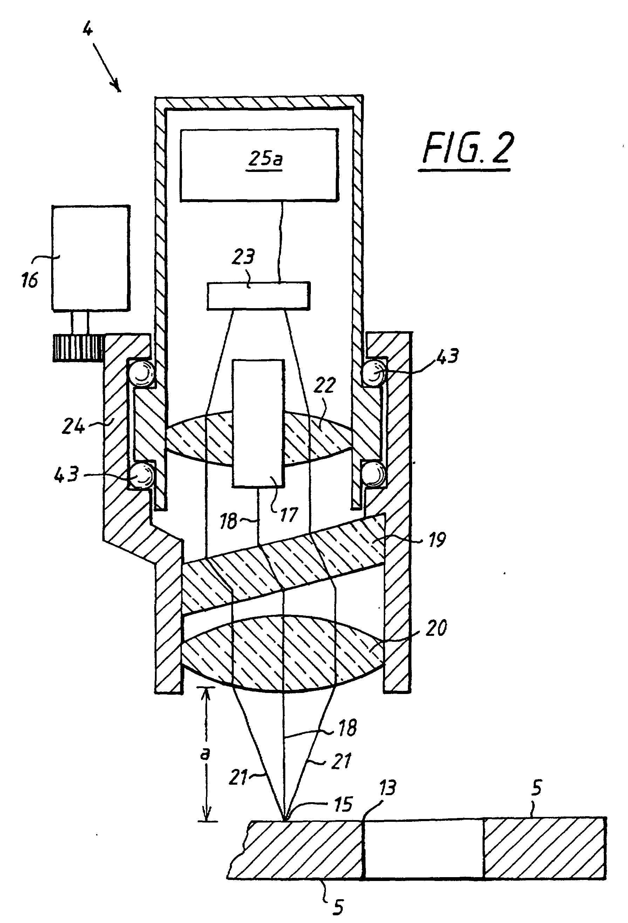

Der optische Taster (4) seinerseits ist in Form eines sogenannten Ringtasters ausgestaltet, so daß der Tastpunkt (15) durch den Taster (4) kreisringförmig auf einem Tastkreis (36) bewegt werden kann. Ein derartiger Taster (4) ist in Figur 2 dargestellt. Der Taster (4) umfaßt hierbei einen Diodenlaser (17) der einen Lichtstrahl (18) aussendet. Der Strahl (18) des Diodenlasers (17) wird durch eine schräg zum Strahl (18) stehende gläserne Ablenkplatte (19) versetzt und über eine Frontlinse (20) auf dem zu vermessenden Werkstück (5) abgebildet. Die vom Werkstück (5) reflektierten Strahlen (21) laufen durch die Frontlinse (20) wieder zurück und werden nach erneuter Versetzung über die Ablenkplatte (19) über eine Empfangslinse (22) auf einem Empfänger (23) abgebildet. Zur Ermittlung des Abstandes (a) zwischen der Werkstückoberfläche des Werkstückes (5) und dem Taster (4) wird hierbei vom Empfänger (23) der Durchmesser des abgebildeten Kreises gemessen, wobei der Durchmesser des abgebildeten Kreises in Abhängigkeit von der Größe des Abstandes (a) zwischen der Werkstückoberfläche des Werkstückes (5) und dem Taster (4) variiert. Um den Durchmesser des Kreises messen zu können ist der Empfänger (23) vorzugsweise als sogenannte Photolateraldiode, auch PSD-Sensor genannt, ausgestaltet, die in Abhängigkeit vom Auftreffpunkt des abgebildeten Kreises ihre Spannung ändert. Der Empfänger (23) kann aber auch als segmentiertes CCD-Array ausgestaltet sein, das in Abhängigkeit von jeweils unterschiedlich beleuchteten Segmenten unterschiedliche Signale gibt. Ist der Durchmesser des abgebildeten Kreises relativ groß, und somit der Abstand (a) von der Werkstückoberfläche groß, so läßt sich von dem betreffenden Empfänger (23) eine große Spannung abgreifen. Ist der Durchmesser des abgebildeten Kreises klein und somit der Abstand (a) zur Oberfläche des Werkstückes (5) gering, so läßt sich nur eine geringe Spannung abgreifen.

Um den Antastpunkt (15) nun kreisringförmig auf dem Tastkreis (36) rotieren zu lassen, ist im Taster (4) zusätzlich ein Motor (16) vorgesehen, der das Gehäuse (24) mit der daran befestigten Ablenkplatte (19) und der Frontlinse (20) rotieren läßt, so daß die Strahlen (18, 21) bedingt durch die Drehung der Ablenkplatte (19) so abgelenkt werden, daß sie sich auf einer kreisförmigen Bahn, dem Tastkreis (36) bewegen. Das Gehäuse (24) ist hierzu über die Kugellager (43) drehbar an dem restlichen Taster (4) gelagert. Der tatsächliche Durchmesser des Tastkreises (36) beträgt hierbei üblicherweise etwa 1mm. An den Empfänger (23) angeschlossen ist weiterhin ein Teil einer Auswerteeinheit (25a), die der Ermittlung des Punktes (P) der Kante dient.

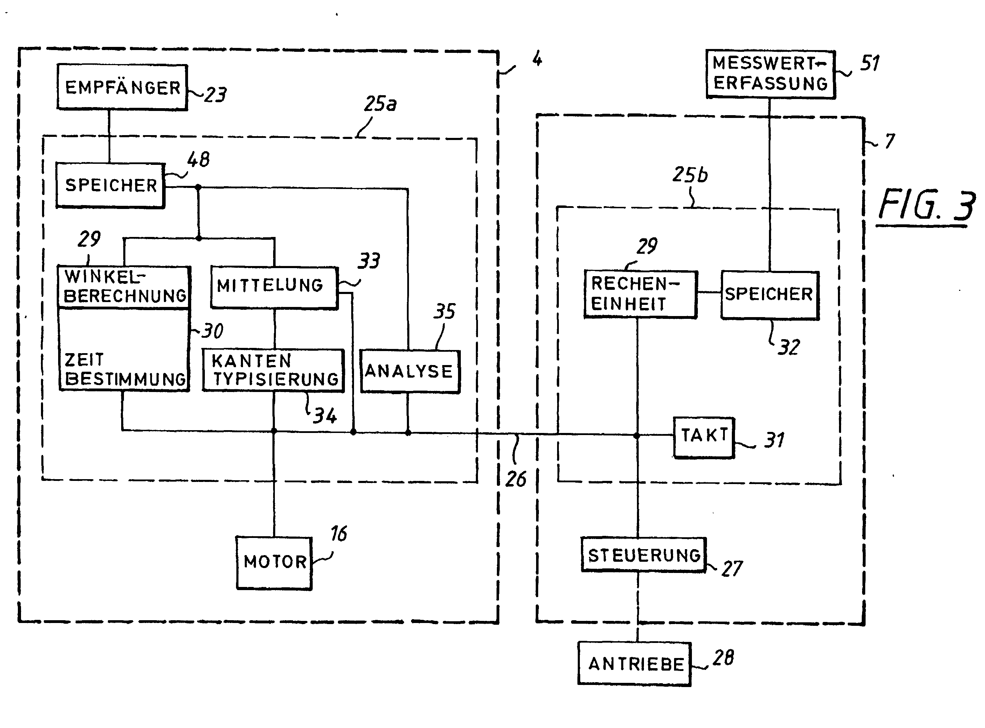

Zur detaillierteren Beschreibung der elektronischen Komponenten des Koordinatenmeßgerätes (10) sind in Figur 3 in einem Blockschaltbild in rein schematischer Form die für die erfindungsgemäße Messung des Punktes (P) der Kante (13) notwendigen elektronischen Komponenten gezeigt. Ein wesentlicher Bestandteil der elektronischen Komponenten bildet die hier zweiteilig ausgeführte Verarbeitungseinheit (25a, 25b). Von der Verarbeitungseinheit (25a, b) werden die vom Taster (4) gemessenen Abstandswerte (a) aufgenommen und der besagte Punkt (P) der Kante (13) bestimmt. Ein Teil der Verarbeitungseinheit (25a) befindet sich hierbei im Taster (4), ein zweiter Teil im Steuerschrank (7) des Koordinatenmeßgerätes (10). Die beiden Teile der Verarbeitungseinheit (25a, 25b) sind über eine Schnittstelle (26) miteinander verbunden. Die Zweiteilung der Verarbeitungseinheit (25a, b) hat den besonderen Vorteil, daß Berechnungen, die zur Bestimmung des Punktes (P) der Kante (13) notwendig sind bereits im Taster (4) durchgeführt werden, so daß der zweite Teil der Verarbeitungseinheit (25b), der üblicherweise in Form eines Zentralrechners im Steuerschrank (7) untergebracht ist, weitgehend von derartigen Aufgaben entlastet ist.

Darüberhinaus ist im Steuerschrank (7) zusätzlich eine Steuerung (27) vorgesehen, die mit den Antrieben (28) des Koordinatenmeßgerätes (10) zur Veränderung der Maschinenpositionen (x, Y, Z, α, β), der Recheneinheit (29) in der Verarbeitungseinheit (25b) sowie über die Schnittstelle (26) mit dem Taster (4) verbunden ist. Die Steuerung (27) ist für die gesamte Koordination der Bewegung des Abtastpunktes (15) verantwortlich und veranlaßt, daß der Abtastpunkt (15) in einer durch die Steuerung (27) vorgebbaren flächigen Bahn über die Kante (13) des Werkstückes (5) hinwegbewegt wird. Dazu gibt die Steuerung (27) an die Antriebe (28) entsprechende Signale, durch die der Taster (4) senkrecht auf die zu vermessende Kante (13) zubewegt wird sowie ein entsprechendes Signal an den Motor (16) des Tasters (4), durch den die oben beschriebene Drehung des Abtastpunktes (15) auf dem Tastkreis (36) festgelegt wird.

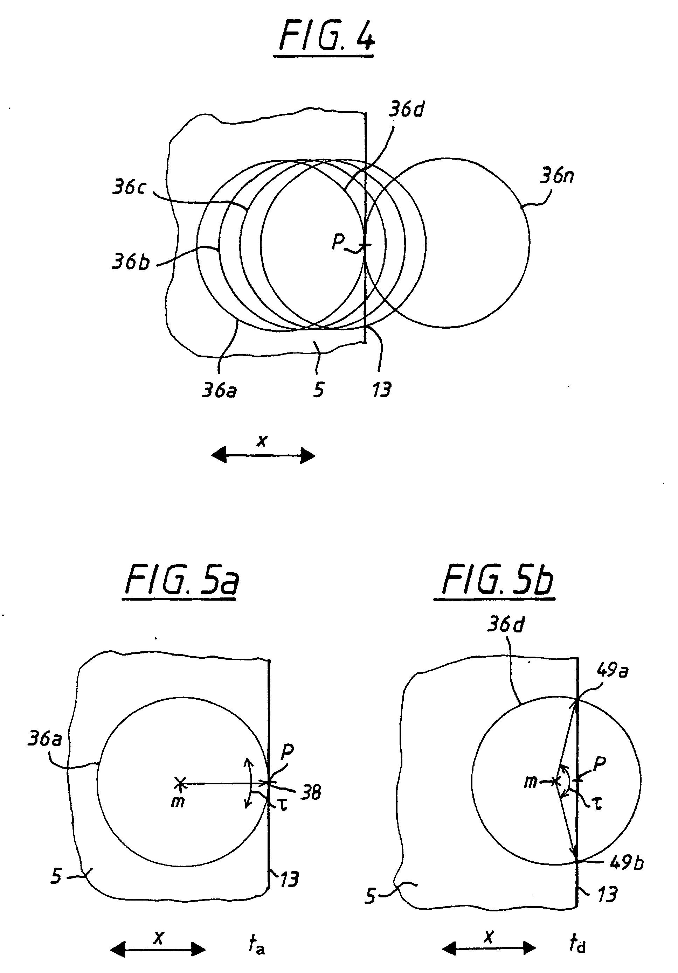

Die Steuerung des Abtastpunktes (15) ist hierbei vorzugsweise derart ausgestaltet, daß der Abtastpunkt (15) einmal auf einem Tastkreis (36) umläuft, bevor der Taster (4) weiter auf die Kante (13) zubewegt wird, so daß die hierdurch entstehende flächige Bahn dann eine Vielzahl an Kreisen (36a, 36b, 36c...36n) umfaßt, wie dies in Figur 4 dargestellt ist. Die Steuerung (27) kann die Antriebe (28) allerdings auch so ansteuern, daß der Taster (4) kontinuierlich durch die Antriebe (28) auf die Kante (13) des zu vermessenden Werkstückes (5) zubewegt wird, so daß dann durch die Überlagerung der Kreisbewegung und der geradlinigen Bewegung eine Zykloide entsteht.

Zur Ermittlung des Punktes (P) der Kante in der Verarbeitungseinheit (25a, 25b) werden während des Verfahrens des Abtastpunktes (15) über die Kante (13) die vom Empfänger (23) des Tasters (4) gemessenen Abstandswerte (a) in einem in der Verarbeitungseinheit (25a) vorgesehenen Speicher (48) abgespeichert. Die Speicherung erfolgt hierbei derart, daß die Abstandswerte in einer festen Beziehung sowohl zum Drehwinkel des momentan durch den Motor (16) eingestellten Abtastpunktes (15) gegenüber einer Referenzstellung als auch in einer festen Beziehung zum aktuellen Zeitpunkt abgespeichert werden.

Direkt anschließend an den Speicher (48) ist eine Zeitbestimmungseinheit (30) vorgesehen, die nachträglich aus den gespeicherten Abstandswerten (a) ein Zeitsignal (t₁₈₀) ableitet, zu dem der Taster (4) gegenüber der Kante (13) eine festdefinierte Stellung einnimmt. Als festdefinierte Stellung wird hierbei willkürlich derjenige Zeitpunkt (t₁₈₀) gewählt, bei dem der Mittelpunkt (m) des Tastkreises (36) sich über der zu vermessenden Kante (13) befindet. Dazu ist in der Zeitbestimmungseinheit (30) eine Winkelberechnungseinheit (29) vorgesehen, die aus den gemessenen Abstandswerten (a) eine Vielzahl zeitlich abhängiger Winkel (τ) ermittelt, nämlich für jeden Umlauf des Tastpunktes (15) auf seinem Tastkreis (36a, 36b...36n) einen hier als Kantenwinkel (τ) bezeichneten Winkel.

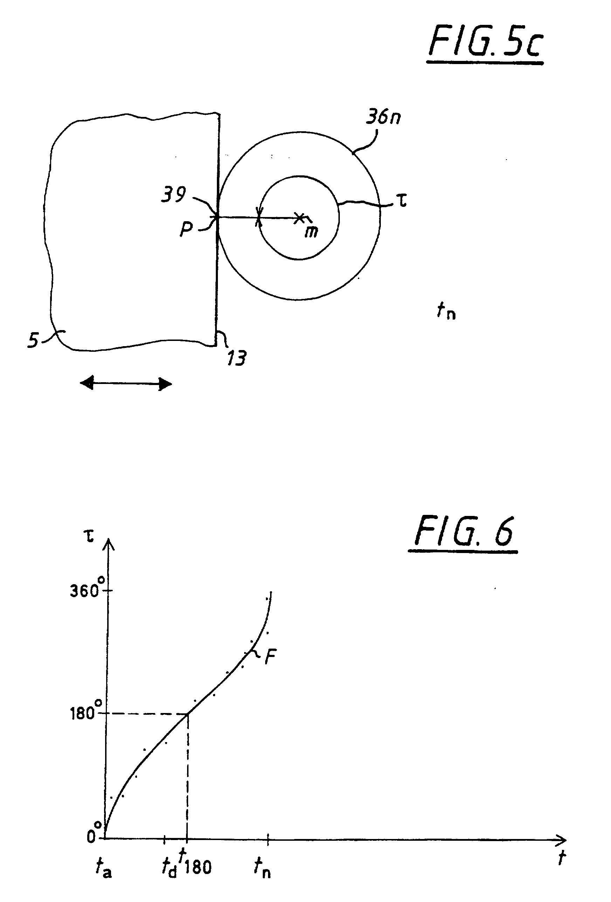

Zum besseren Verständnis sei vorab auf Figur 5 verwiesen. In Figuren 5a, b, c werden hierbei in zeitlicher Abfolge einige der aus Fig. 4 gezeigten Umläufe des Tastkreises (36a, d, n) gezeigt. Die Bewegungsrichtung wurde bei dem hier gezeigten Beispiel der Einfachheit halber so gewählt, daß die Oberfläche des zu vermessenden Werkstückes (5) parallel zur Y-Z-Ebene ausgerichtet ist und daß die Kante (13) so gewählt ist, daß sich der Taster (4) zum Abtasten der Kante (13) in X-Richtung bewegt. Während sich der Tastkreis (36a) gemäß Fig. 5a zum Zeitpunkt (tₐ) noch vollständig auf der Oberfläche des zu vermessenden Werkstückes (5) befindet, ist der Tastkreis (36c) zum Zeitpunkt (t_{d}) bereits schon teilweise jenseits der Kante (13) des Werkstückes (5). Der Tastkreis (36n) ist zum Zeitpunkt (tₙ) ist bereits hinter der Kante (13).

Als Kantenwinkel (τ) soll nun hier derjenige Winkel verstanden werden, der sich aus der Verbindung der Kantenübergänge (38, 39, 49a, b) mit dem Mittelpunkt (m) des Tastkreises des jeweiligen Tastkreises (36a, d, n) zum betreffenden Zeitpunkt (tₐ, t_{d}, tₙ) ergibt. Für Figur 5a beträgt der Kantenwinkel (τ) 0°. Für Figur 5b beträgt er etwa 170°. Für Figur 5c beträgt er 360°.

Die Ermittlung des Kantenwinkels (τ) kann in der Winkelberechnungseinheit (29) leicht vorgenommen werden, indem aus den im Speicher (48) gespeicherten Abstandswerten (a) für jeden Umlauf jeweils eines Tastkreises (36a, 36b, 36c...36n) diejenigen Abstandswerte herausgesucht werden, bei denen sich der Abstandswert sprunghaft ändert. Für diese Werte wird angenommen, daß sich hier die Kantenübergänge (38, 39, 49a, b) befinden. Wie bereits oben erläutert, sind die Abstandswerte (a) in einer festen Beziehung sowohl zum Drehwinkel des momentan durch den Motor (16) eingestellten Abtastpunktes (15) gegenüber einer Referenzstellung als auch in einer festen Beziehung zum aktuellen Zeitpunkt (tₐ, t_{c}, tₙ) abgespeichert. Aus den entsprechenden Drehwinkeln wird in der Winkelberechnungseinheit (29) dann der zwischen den ermittelten Kantenübergängen (38, 39, 49a, b) liegende Kantenwinkel (τ) in Abhängigkeit vom jeweiligen Zeitpunkt (tₐ, t_{c}, tₙ) berechnet.

Zur Ermittlung des Zeitsignals (t₁₈₀), bei dem sich der Mittelpunkt (m) des Tastkreises (36a, b, c...n) genau über der Kante (13) befindet, muß nun aus den zeitlich abhängigen Kantenwinkeln (τ) derjenige Zeitpunkt (t₁₈₀) bestimmt werden, zu dem der Kantenwinkel (τ) genau 180° beträgt. Dazu wird in der Zeitbestimmungseinheit (30) in einem ersten Schritt an die zeitlich abhängigen Kantenwinkel (τ) eine Funktion (F) approximiert, wie dies Figur 6 darstellt. Es sind hierzu die unterschiedlichsten Approximationen, wie beispielsweise eine lineare oder parabolische Approximation, eine Approximation über ein Polynom n-ten Grades, eine trigonometrische Approximation etc. denkbar. Daraufhin wird aus dem Verlauf der an die Winkel (τ) approximierten Funktion (F) das Zeitsignal (t₁₈₀) bestimmt, indem derjenige Zeitpunkt (t₁₈₀) der Funktion (F) bestimmt wird, dessen Wert genau 180° beträgt.

Das so im Taster (4) bestimmte Zeitsignal (t₁₈₀) wird über die Schnittstelle (26) an die Recheneinheit (29) im zweiten Teil der Verarbeitungseinheit (25b) übermittelt. Die Recheneinheit (29) ihrerseits liest auf Basis des Zeitsignals (t₁₈₀) aus einem Speicher (32) die entsprechenden Maschinenpositionen (X, Y, Z, α, β) aus und ermittelt hieraus unter Kenntnis der Stellung des Tasters (4) gegenüber der Kante (13) den besagten Punkt (P) der Kante (13). Der Speicher (32) muß dazu so ausgestaltet sein, daß er in einer festen zeitlichen Beziehung die Maschinenpositionen (X, Y, Z, α, β), die durch die Meßwerterfassungen (51) geliefert werden, speichert. Dazu kann er als Ringpuffer ausgestaltet sein, der in einem durch die Takteinheit (31) vorgegebenen Takt (T) die Maschinenpositionen (X, Y, Z, α, β) speichert.

Um das Ergebnis der Tasterstellung möglichst schnell ermitteln zu können, wird das Koordinatenmeßgerät und der Taster (4) durch eine Taktungseinheit (31) in einem festgelegten Takt (T) betrieben. Das von der Zeitbestimmungseinheit (30) generierte Zeitsignal (t₁₈₀) umfaßt hierbei ein Taktabstandssignal (t_{ab}), das angibt, wieviele Takte vorher der Taster (4) die besagte Stellung gegenüber der Kante (13) eingenommen hat und ein Triggersignal (tₜᵣ), das den Zeitpunkt festlegt, zu dem die besagte Stellung des Tasters (4) gegenüber der Kante (13) um die Anzahl der Takte gemäß dem Taktabstandssignal (t_{ab}) zurückliegt. Diese beiden Signale werden über die Schnittstelle (26) an die Verarbeitungseinheit (25b) übermittelt.

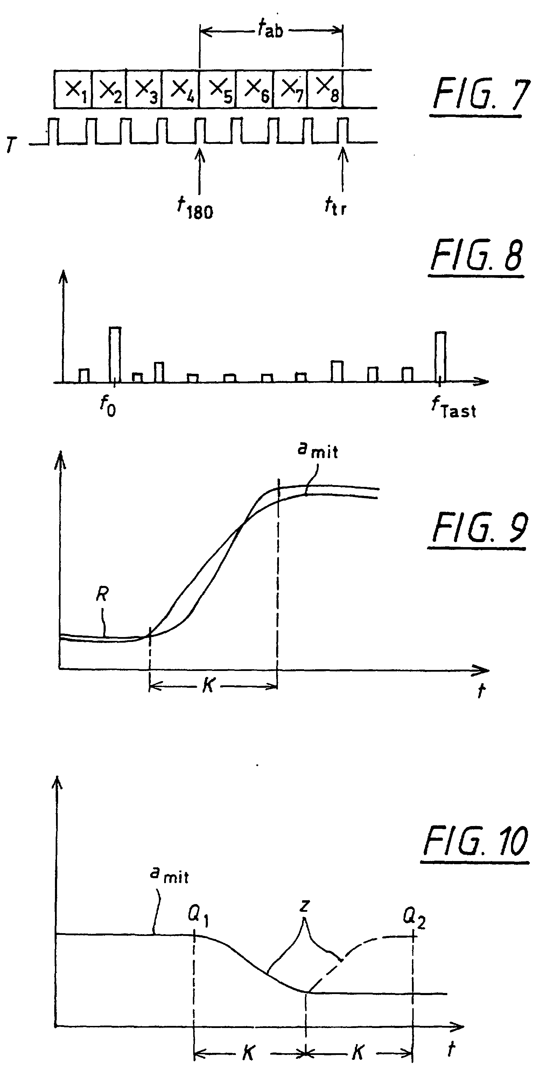

In der Verarbeitungseinheit (25b) werden, wie bereits oben erwähnt, in den Speicher (32) laufend die Maschinenpositionen (X, Y, Z, α, β) im Systemtakt abgespeichert, wie dies beispielhaft Figur 7 für die X-Werte (X1, X2, X3...X8) gezeigt ist. Zur Ermittlung der durch das Zeitsignal (t₁₈₀) festgelegten Maschinenposition (X5) empfängt die Recheneinheit (29) das Taktabstandssignal (t_{ab}) über die Schnittstellenleitung (26) sowie das darauffolgende Triggersignal (tₜᵣ). Nachdem das Triggersignal (tₜᵣ) bei der Recheneinheit (29) eingetroffen ist, liest die Recheneinheit (29) zur Bestimmung der Maschinenposition in X-Richtung aus dem Speicher (32) diejenige Maschinenposition (X5) aus, die vom Zeitpunkt des Eintreffens des Triggersignals (tₜᵣ) aus gerechnet um die Anzahl der Takte gemäß dem Taktabstandsignals (t_{ab}) zurückliegt. Diese Maschinenposition (X5) repräsentiert dann die Maschinenposition in X-Richtung zu demjenigen Zeitpunkt, zu dem sich der Mittelpunkt (m) des Tastkreises über der Kante (13) befindet. Die restlichen Maschinenpositionen (Y, Z, α, β) werden analog ausgelesen.

Selbstverständlich kann das beschriebene Taktsignal (t₁₈₀) variieren. So könnte beispielsweise das Triggersignal (tₜᵣ) zuerst geschickt werden und dann erst das Taktabstandssignal (t_{ab}). Darüberhinaus kann das Taktabstandssignal entweder konstant sein oder aber auch variieren. Selbstverständlich kann das Taktabstandssignal auch als Digitaler Zeitwert übermittelt werden, wobei dann zu Ermittlung der Maschinenpositionen in der Verarbeitungseinheit (25b) ein wesentlich höherer Rechenaufwand notwendig würde.

Aus den wie eben beschrieben ausgelesenen Maschinenpositionen (X, Y, Z, α, β) kann bislang nur die genaue Position des Punktes (P) der Kante (13) in der Ebene der Oberfläche des Werkstückes (5) ermittelt werden. Soll zusätzlich auch noch die genaue räumliche Position des Punktes (P) der Kante ermittelt werden, so benötigt die Verarbeitungseinheit (25b) zusätzlich als Maschinenposition den aktuellen Abstandswert von der Oberfläche des Werkstückes (5). Dazu könnten prinzipiell alle Abstandswerte (a) des Tasters (4) vom Taster (4) an die Recheneinheit (29) übermittelt und hier ähnlich wie die anderen Maschinenpositionen (X, Y, Z, α, β) zur Bestimmung des Punktes (P) der Kante (13) weiterverarbeitet werden.

Besonders vorteilhaft ist es jedoch, wenn nur ein einziges Mal ein Abstandswert ermittelt wird, der von der Verarbeitungseinheit (25a) über die Schnittstelle (26) an die Verarbeitungseinheit (25b) übermittelt wird und dort bis zur Ermittlung des Punktes (P) der Kante (13) gespeichert wird. Eine derartige einmalige Ermittlung des Abstandswertes ist nur deshalb möglich, da der Abtaststrahl (18), wie weiter unten noch genauer ausgeführt, vor der Messung senkrecht auf die Oberfläche des zu vermessenden Werkstückes (5) ausgerichtet wird, so daß bei einer in etwa ebenen Oberfläche des Werkstückes (5) nahezu konstante Abstandswerte (a) gemessen werden können. Um zusätzlich Fehler bei der einmaligen Bestimmung des Abstandswertes zur vermeiden weist die Verarbeitungseinheit (25a) zusätzlich eine Mittelungseinheit (33) auf, die über eine definierte Anzahl an Abstandswerten (a), nämlich jeweils einen kompletten Umlauf eines Tastkreises (36), mittelt, um hierdurch Mittelwerte (aₘᵢₜ) in Form von gemittelten Abstandswerten des Tasters (4) zur Oberfläche des Werkstückes (5) zu erhalten. Die Mittelungseinheit (33) ist dazu so ausgestaltet, daß sie diesen Abstandswert (aₘᵢₜ) zu einem Zeitpunkt ermittelt, zu dem sich noch alle Abtastpunkte (a) auf der Oberfläche des zu vermessenden Werkstückes (5) befinden. Der betreffende Abstandswert (aₘᵢₜ) wird ebenfalls über die Schnittstelle (26) an die Verarbeitungseinheit (25b) übermittelt, und hier in der Recheneinheit (29) bis zur Berechnung des exakten Punktes (P) der Kante (13) zwischengespeichert.

Wie bereits oben erläutert, ist es bei der erfindungsgemäßen Kantenmessung notwendig, daß der Abtaststrahl (18) des Tasters (4) weitestgehend senkrecht auf der Oberfläche des zu vermessenden Werkstückes (5) auftrifft und somit die Abstände (a) eines Umlaufes des Tastkreises (36) weitgehend konstant sind, solange sich der Tastkreis (36) auf der Oberfläche des zu vermessenden Werkstückes (5) befindet. Dazu wird der Taster (4) üblicherweise vor der eigentlichen Messung des Punktes (P) der Kante (13) entsprechend eingerichtet, indem beispielsweise willkürlich einige Abstandswerte (a) aufgenommen werden und der Taster (4) über die Dreh-Schwenkeinheit (14) so auf die Oberfläche des zu vermessenden Werkstückes (5) ausgerichtet wird, daß die Abstandswerte (a) für einen Umlauf eines Tastkreises (36) in etwa gleich sind. Allerdings kann es nun sein, daß die Oberfläche Unebenheiten aufweist oder gewölbt ist, so daß eine seriöse Messung des Punktes (P) der Kante (13) nicht möglich ist. Deshalb kann zusätzlich in der Verarbeitungseinheit (25a) ein Analysator (35) vorgesehen sein, der unmittelbar mit dem Speicher (48) verbunden ist und Teile der gespeicherten Abstandswerte (a) fourrieranalysiert, um hierdurch Informationen über die Zuverlässigkeit der Kantenmessung zu erhalten.

Als Abstandswerte (a), die hierbei vom Analysator (35) analysiert werden, kommen nur diejenigen in Betracht, die aufgenommen wurden, während sich der Tastkreis (36) noch vollständig auf der Oberfläche des zu vermessenden Werkstückes (5) befand.

In Figur 8 wird rein schematisch und beispielhaft ein durch den Analysator (35) berechnetes Fourierprofil gezeigt, mit dem sich die besagten Ungenauigkeiten leicht erfassen lassen. So gibt beispielsweise der mit f₀ bezeichnete Fourierkoeffizient die Drehfrequenz des Tastpunktes wieder. Anhand der Größe des Koeffizienten f₀ läßt sich deshalb genau ermitteln, ob und wie stark der Taster (4) gegenüber der Oberfläche des Werkstückes (5) geneigt ist. Der Koeffizient f_{Tast} hingegen gibt die Frequenz wieder, mit der die Abstandswerte (a) aufgenommen werden. Alle zwischen f₀ und f_{Tast} liegenden Koeffizienten, mit Ausnahme von Oberschwingungen von f₀, geben eine Aussage über die Güte der gemessenen Oberfläche. Je größer diese Koeffizienten sind, desto strukturierter ist die Oberfläche der zu vermessenden Werkstückes. Die Koeffizienten unterhalb von f₀ geben hingegen Aufschluß über großflächigere Fehler wie beispielsweise Wölbungen.

Es kann ferner vorkommen, daß neben den üblicherweise rechtwinklig ausgebildeten Kanten auch andere Kanten vermessen werden sollen. Beispielsweise kommen Kanten mit unterschiedlichen Radien, Kanten mit einer Anfasung, gestufte Kanten etc. in betracht. Es ist deshalb in solchen Fällen wünschenswert den Typus der Kante (13) zu bestimmen, um beispielsweise Korrekturen am ermittelten Punkt (P) der Kante (13) vorzunehmen. Dazu kann in der Verarbeitungseinheit (25a) weiterhin auch eine Kantentypisierungseinheit (34) vorgesehen sein, die die betreffende Form der Kante (13) zur Korrektur des Punktes (P) der Kante (13) ermittelt. Dazu kann die Kantentypisierungseinheit (34) mit der Mittelungseinheit (33) verbunden sein, wobei die Mittelungseinheit (33) der Kantentypisierungseinheit (34) kontinuierlich über jeweils einen Tastkreisumlauf gebildete Mittelwerte (aₘᵢₜ) sendet. Die Kantentypisierungseinheit (34) kann den Typus der Kante (13) hierbei auf zwei verschiedene Arten ermitteln.

Eine erste Möglichkeit besteht darin, daß in der Kantentypisierungseinheit (34) der Verlauf der Mittelwerte (aₘᵢₜ) mit bereits vorliegenden Referenzwertreihen (R) vergleicht und aufgrund der Ähnlichkeit des Verlaufes der Mittelwerte (aₘᵢₜ) zu einer der Referenzwertreihen (R) qualitativ die Beschaffenheit der Kante (13) ermittelt. Hierzu werden die Mittelwerte (aₘᵢₜ) einfach in eine Vielzahl von bereits abgespeicherten Referenzwertreihen (R), wie im Zusammenhang mit Figur 9 gezeigt, eingepaßt. Hierzu werden in einem ersten Schritt die Referenzwertreihe (R) und die Mittelwerte (aₘᵢₜ) in Richtung der Abszisse (t) derart übereinandergeschoben, bis die Summe der Abstände der Mittelwerte (aₘᵢₜ) und der Punkte der Referenzwertreihe (R) minimal werden. In einem weiteren Schritt wird die Kurve der Mittelwerte (m) in Richtung der Ordinate solange gestreckt, bis sich hier ebenfalls minimale Abstände zwischen den Mittelwerten (aₘᵢₜ) und den Punkten der Referenzwertreihe (R) ergeben. Die Summe der Abstände im Bereich des Kantenbereiches (K) werden dann als Maß für die Übereinstimmung mit der betreffenden Referenzwertreihe (R) gewertet. Es sei darauf hingewiesen, daß die Mittelwerte (aₘᵢₜ) und die Referenzwertreihe (R) vor der Einpassung zeitlich abgeglichen werden müssen, so daß der zeitliche Abstand zwischen zwei Punkten der Referenzwertreihe (R) genau mit dem zeitlichen Abstand zwischen zwei Punkten der Mittelwerte (aₘᵢₜ) übereinstimmt.

Die Kantentypisierungseinheit (34) kann in einer zweiten Ausführung gleichfalls derart ausgebildet sein, daß aus einer definierten Anzahl von Mittelwerten (aₘᵢₜ) ein Fourierprofil errechnet wird und daß das errechnete Fourierprofil mit einer Vielzahl von bereits vorher gespeicherten Referenzprofilen verglichen wird und aufgrund der Ähnlichkeit des errechneten Fourierprofils mit einem der Referenzprofile die Beschaffenheit der Kante (13) ermittelt wird.

Zur Ermittelung des Fourrierprofils wird hierbei so vorgegangen, wie dies im folgenden im Zusammenhang mit Figur 10 erläutert wird. So wird hierbei aus dem Verlauf der Mittelwerte (aₘᵢₜ) in einem ersten Schritt über die Steigung der Mittelwerte (aₘᵢₜ) der Kantenbereich (K) ermittelt. In einem weiteren Schritt werden die Mittelwerte (aₘᵢₜ) im Bereich des Kantenbereich (K) auf die gestrichelte Kurve gespiegelt, so daß sich hierdurch eine achsensymmetrische Kurve (Z) ergibt. Da der Anfangspunkt (Q1) der Kurve (Z) und der Endpunkt (Q2) der Kurve (Z) achsensymmetrisch sind, kann über diese Kurve (Z) dann ein Fourrierprofil berechnet werden. Das Fourierprofil kann dann in ähnlicher Weise, wie oben beschrieben, in eine Vielzahl von Referenzprofilen eingepaßt werden, um hierdurch die Beschaffenheit der Kante zu ermitteln.

Die beiden beschriebenen Verfahren zur Ermittlung der Beschaffenheit der Kante (13) können auch gleichzeitig in der Kantenerkennungseinheit (34) angewandt werden. Beispielsweise kann das erstbeschriebene Verfahren für Kanten mit einem Radius von kleiner als dem Tastkreisdurchmesser (36) verwendet werden, während das zweite Verfahren für Kanten eingesetzt werden kann, deren Durchmesser größer als der Tastkreis (36a) ist.

Es sei nun Abschließend bemerkt, daß das hier beschriebene Verfahren keinesfalls auf die gezeigten Ausführungsbeispiele beschränkt ist. Selbstverständlich werden von der Erfindung auch abgewandelte Ausführungsformen miterfaßt, sofern diese unter die beigelügten Ansprüche fullen. So kann anstelle des hier gezeigten Ständermeßgerätes auch ein Portalmeßgerät verwendet werden. Auch die genaue Anordnung der elektronischen Komponenten, wie beispielsweise der Verarbeitungseinheit (25a,b) kann variieren und unterschiedlich ausgeführt sein.

## Patentansprüche

1. Verfahren zur Messung der Kanten (13) von zu vermessenden Werkstücken (5) mit einem optischen Taster (4), der einen Abstandswert (a) zwischen dem Taster (4) und der Werkstückoberfläche an einem einstellbaren Abtastpunkt (15) misst, umfassend folgende Verfahrensschritte:
- Verfahren des Abtastpunktes (15) entlang einer Bahn (36a,36b..36n) derart über die Kante (13) des zu vermessenden Werkstückes (5) hinweg, so dass die Kante von der Bahn (36a,36b..36n) in einer Vielzahl von nebeneinander liegenden Schnittpunkten geschnitten wird;
- Aufnahme der während des Verfahrens durch den Taster gemessenen Abstandswerte und bestimmen der Schnittpunkte zwischen der Bahn (36a,36b..36n) und der Kante aus den Abstandswerten,
**gekennzeichnet dadurch, dass**
- aus den Schnittpunkten genau ein Punkt (P) der Kante (13) ermittelt wird.

2. Verfahren nach Anspruch 1, wobei zur Bestimmung des Punktes der Kante aus den Abstandswerten wenigstens ein Zeitsignal (t180) abgeleitet wird, das festlegt, zu welchem Zeitpunkt Maschinenpositionen (X, Y, Z, α, β) eines Koordinatenmessgerätes zur Bestimmung des Punktes der Kante übernommen werden sollen.

3. Verfahren nach Anspruch 2, wobei genau ein Zeitsignal zur ermittelung des Punktes abgeleitet wird, das einen Zeitpunkt festlegt, zu dem der Taster gegenüber der Kante eine festdefinierte Stellung einnimmt.

4. Verfahren nach Anspruch 3, wobei das Zeitsignal im Taster bestimmt wird.

5. Verfahren nach Anspruch 4, **dadurch gekennzeichnet, daß** das Koordinatenmeßgerät in einem festgelegten Takt (T) betrieben wird und daß das besagte Zeitsignal wenigstens ein Taktabstandssignal (t_{ab}) umfaßt, das angibt, wieviele Takte vorher der Taster die besagte Stellung eingenommen hat und ein Triggersignal (tₜᵣ) umfaßt, das den Zeitpunkt festlegt, zu dem die Stellung um die Anzahl der Takte gemäß dem Taktabstandssignal zurückliegt.

6. Verfahren nach Anspruch 3-5, bei dem der optische Taster (4) den Abtastpunkt kreisringförmig auf einem Tastkreis (36) mit einem Mittelpunkt (m) führt **dadurch gekennzeichnet, dass** zur Ermittlung des Zeitsignals aus den gemessenen Abstandswerten die Kantenübergänge (38, 39, 49a,b) unterschiedlicher Tastkreise (36a-36n) mit der Kante ermittelt werden und hieraus eine Vielzahl zeitlich abhängiger Winkel (τ) ermittelt werden, die die Kantenübergänge (38, 39, 49a,b) eines Tastkreises mit dem Mittelpunkt (m) des Tastkreises einschließen.

7. Verfahren nach Anspruch 6, **dadurch gekennzeichnet, daß** das Zeitsignal aus dem Verlauf einer an die Winkel approximierten Funktion (F) ermittelt wird.

8. Verfahren nach Anspruch 1, **dadurch gekennzeichnet, daß** die Bahn eine gekrümmte Form aufweist.

9. Verfahren nach Anspruch 8, **dadurch gekennzeichnet, daß** die Bahn einen Kreis (36a) oder eine Zykloide umfaßt.

10. Verfahren nach Anspruch 1, **dadurch gekennzeichnet, daß** über eine definierte Anzahl von Abstandswerten Mittelwerte (aₘᵢₜ) gebildet werden.

11. Verfahren nach Anspruch 10, **dadurch gekennzeichnet, daß** der Verlauf der Mittelwerte mit einer Vielzahl von bereits vorher abgespeicherten Referenzwertreihen (R) verglichen werden und daß aufgrund der Ähnlichkeit des Verlaufes der Mittelwerte zu einer der Referenzwertreihen die Beschaffenheit der Kante ermittelt wird.

12. Verfahren nach Anspruch 10, **dadurch gekennzeichnet, daß** aus einer definierten Anzahl an Mittelwerten ein Fourrierprofil errechnet wird und daß das errechnete Fourierprofil mit einer Vielzahl von vorher abgespeicherten Referenzprofilen verglichen wird und daß aufgrund der Ähnlichkeit des errechneten Fourierprofils mit einem der Referenzprofile qualitativ die Beschaffenheit der Kante ermittelt wird kann.

13. Verfahren nach Anspruch 1, **dadurch gekennzeichnet, daß** Teile der gespeicherten Abstandswerte fourieranalysiert werden, um hierdurch Informationen über die Zuverlässigkeit der Kantenmessung zu erhalten.

14. Koordinatenmeßgerät zur Vermessung der Kanten (13) von Werkstücken (5) umfassend
- einen optischen Taster (4) der so eingerichtet ist, dass er einen Abstandswert (a) zwischen dem Taster und der Werkstückoberfläche an einem einstellbaren Abtastpunkt (15) mißt;
- eine Steuerung (27), die so eingerichtet ist, dass sie den Abtastpunkt entlang einer Bahn über die Kante des Werkstückes derart hinweg verfährt, so dass die Kante von der Bahn (36a,36b..36n) in einer Vielzahl von nebeneinander liegenden Schnittpunkten geschnitten wird;
- eine mit dem optischen Taster verbundene Verarbeitungseinheit (25a, 25b) zur Aufnahme der während des Verfahrens vom Taster gemessenen Abstandswerte (a) und zum Bestimmen der Schnittpunkte zwischen der Bahn (36a,36b..36n) und der Kante aus den Abstandswerten,
**gekennzeichnet dadurch, dass**
- die Verarbeitungseinheit so eingerichtet ist, dass sie aus diesen Schnittpunkten genau einen Punkt (P) der Kante ermittelt.

15. Koordinatenmeßgerät nach Anspruch 14, **dadurch gekennzeichnet, daß** in der Verarbeitungseinheit eine Zeitbestimmungseinheit (30) vorgesehen ist, die zur Bestimmung des Punktes (P) der Kante aus den Abstandswerten wenigstens ein Zeitsignal (t₁₈₀) ableitet, das festlegt, zu welchem Zeitpunkt Maschinenpositionen (X, Y, Z, α, β) zur Bestimmung des Punktes der Kante übernommen werden sollen.

16. Koordinatenmeßgerät nach Anspruch 15, wobei in der Zeitbestimmungseinheit genau ein Zeitsignal abgeleitet wird, das einen Zeitpunkt festlegt, zu dem der Taster gegenüber der Kante eine festdefinierte Stellung einnimmt.

17. Koordinatenmeßgerät nach Ansprüchen 15 oder 16, **dadurch gekennzeichnet, daß** ein Teil der Verarbeitungseinheit (25a) sich im Taster befindet.

18. Koordinatenmeßgerät nach Ansprüchen 15-17, **dadurch gekennzeichnet, daß** das Koordinatenmeßgerät durch eine Taktungseinheit (31) in einem festgelegten Takt (T) betrieben wird und daß das von der Zeitbestimmungseinheit vorgesehene Zeitsignal wenigstens ein Taktabstandssignal (t_{ab}) umfaßt, das angibt, wieviele Takte vorher der Taster die besagte Stellung eingenommen hat und ein Triggersignal (ttr) umfaßt, das den Zeitpunkt festlegt, zu dem die besagte Stellung um die Anzahl der Takte gemäß dem Taktabstandssignal zurückliegt.

19. Koordinatenmeßgerät nach Anspruch 14-18, bei dem der optische Taster (4) den Abtastpunkt kreisringförmig auf einem Tastkreis (36) mit einem Mittelpunkt (m) führt **dadurch gekennzeichnet, daß** zur Ermittlung des Zeitsignals in der Zeitbestimmungseinheit zusätzlich eine Winkelberechnungseinheit (29) vorgesehen ist, die aus den gemessenen Abstandswerten die Kantenübergänge (38, 39, 49a,b) unterschiedlicher Tastkreise (36a-36n) mit der Kante ermittelt und hieraus eine Vielzahl zeitlich abhängiger Winkel (τ) ermittelt, die die Kantenübergänge (38, 39, 49a,b) eines Tastkreises mit dem Mittelpunkt (m) des Tastkreises einschließen.

20. Koordinatenmeßgerät nach Anspruch 19, **dadurch gekennzeichnet, daß** das Zeitsignal in der Zeitbestimmungseinheit aus dem Verlauf einer an die Winkel approximierten Funktion (F) ermittelt wird.

21. Koordinatenmeßgerät nach Anspruch 14, **dadurch gekennzeichnet, daß** der Taster ein Ringtaster ist.

22. Koordinatenmeßgerät nach Anspruch 14 oder 21, **dadurch gekennzeichnet, daß** der Taster über eine Dreh-Schwenkeinheit (14) mit dem Koordinatenmeßgerät verbunden ist.

23. Koordinatenmeßgerät nach Anspruch 14, **dadurch gekennzeichnet, daß** in der Verarbeitungseinheit eine Mittelungseinheit (33) vorgesehen ist, die über eine definierte Anzahl an Abstandswerten einen Mittelwert (aₘᵢₜ) ermittelt.

24. Koordinatenmeßgerät nach Anspruch 23, **dadurch gekennzeichnet, daß** in der Verarbeitungseinheit eine Kantentypisierungseinheit (34) vorgesehen ist, die die definierten Mittelwerte mit bereits vorliegenden Referenzwertreihen (R) vergleicht und aufgrund der Ähnlichkeit des Verlaufes der Mittelwerte zu einer der Referenzwertreihen qualitativ die Beschaffenheit der Kante ermittelt.

25. Koordinatenmeßgerät nach Anspruch 23, **dadurch gekennzeichnet, daß** eine Kantentypisierungseinheit (34) in der Verarbeitungseinheit vorgesehen ist, die aus einer definierten Anzahl von Mittelwerten ein Fourierprofil errechnet und die das errechnete Fourierprofil mit einer Vielzahl von bereits vorher gespeicherten Referenzprofilen vergleicht und aufgrund der Ähnlichkeit des errechneten Fourierprofils mit einem der Referenzprofile die Beschaffenheit der Kante ermittelt.

26. Koordinatenmeßgerät nach Anspruch 14, **dadurch gekennzeichnet, daß** ein Analysator (35) Teile der gespeicherten Abstandswerte fourieranalysiert um hierdurch Informationen über die Zuverlässigkeit der Kantenmessung zu erhalten.

## Claims

1. Method for measuring the edges (13) of workpieces (5), which are to be measured, with the aid of an optical probe (4) which measures a distance value (a) between the probe (4) and the workpiece surface at an adjustable scanning point (15), comprising the following method steps:
- moving the scanning point (15) away along a track (36a, 36b..36n) in such a way over the edge (13) of the workpiece (5) to be measured that the edge is cut by the track (36a, 36b..36n) in a multiplicity of juxtaposed intersection points;
- recording the distance values measured by the probe during the method, and determining the intersection points between the track (36a, 36b..36n) and the edge from the distance values,
**characterized in that**
- exactly one point (P) of the edge (13) is determined from the intersection points.

2. Method according to Claim 1, in which in order to determine the point of the edge from the distance values at least one time signal (t180) is derived which fixes the instant at which machine positions (X, Y, Z, α, β) of a coordinate measuring machine are to be taken over to determine the point on the edge.

3. Method according to Claim 2, in which exactly one time signal is derived for determining the point which fixes an instant at which the probe assumes a permanently defined position relative to the edge.

4. Method according to Claim 3, in which the time signal is determined in the probe.

5. Method according to Claim 4, **characterized in that** the coordinate measuring machine is operated with a fixed time cycle (T), and **in that** the said time signal comprises at least one time cycle spacing signal (t_{ab}) which specifies how many time cycles previously the probe has assumed the said position, and comprises a trigger signal (tₜᵣ) which fixes the instant at which the position lies behind by the number of the time cycles in accordance with the time cycle spacing signal.

6. Method according to Claims 3 - 5, in which the optical probe (4) guides the scanning point annularly on a scanning circle (36) with a centre (m), **characterized in that** in order to determine the time signal from the measured distance values, the edge transitions (38, 39, 49a, b) of different scanning circles (36a-36n) with the edge are determined, and there are determined therefrom a multiplicity of temporally dependent angles (τ) which the edge transitions (38, 39, 49a,b) of a scanning circle enclose with the centre (m) of the scanning circle.

7. Method according to Claim 6, **characterized in that** the time signal is determined from the profile of a function (F) approximated to the angles.

8. Method according to Claim 1, **characterized in that** the track has a curved shape.

9. Method according to Claim 8, **characterized in that** the track comprises a circle (36a) or a cycloid.

10. Method according to Claim 1, **characterized in that** mean values (aₘᵢₜ) are formed over a defined number of distance values.

11. Method according to Claim 10, **characterized in that** the profile of the mean values is compared with a multiplicity of previously stored reference value series (R), and **in that** the nature of the edge is determined on the basis of the similarity of the profile of the mean values to one of the reference value series.

12. Method according to Claim 10, **characterized in that** a Fourier profile is calculated from a defined number of mean values, and **in that** the calculated Fourier profile is compared with a multiplicity of previously stored reference profiles, and **in that** the nature of the edge can be determined qualitatively on the basis of the similarity of the calculated Fourier profile to one of the reference profiles.

13. Method according to Claim 1, **characterized in that** some of the stored distance values are subjected to Fourier analysis in order thereby to obtain information about the reliability of the edge measurement.

14. Coordinate measuring machine for measuring the edges (13) of workpieces (5), comprising
- an optical probe (4) which is set up in such a way that it measures a distance value (a) between the probe and the workpiece surface at an adjustable scanning point (15);
- a control (27) which is set up such that it moves the scanning point away along a track over the edge of the workpiece in such a way that the edge is cut by the track (36a, 36b..36n) at a multiplicity of juxtaposed intersection points;
- a processing unit (25a, 25b), connected to the optical probe, for recording the distance values (a) measured by the probe during the method, and for determining the intersection points between the track (36a, 36b..36n) and the edge from the distance values,
**characterized in that**
- the processing unit is set up such that exactly one point (P) on the edge is determined from these intersection points.

15. Coordinate measuring machine according to Claim 14, **characterized in that** provided in the processing unit is a timing unit (30) which for the purpose of determining the point (P) on the edge derives from the distance values at least one time signal (t₁₈₀) which fixes the instant at which machine positions (X, Y, Z, α, β) are to be taken over to determine the point on the edge.

16. Coordinate measuring machine according to Claim 15, in which there is derived in the timing unit exactly one timing signal which fixes an instant at which the probe assumes a permanently defined position relative to the edge.

17. Coordinate measuring machine according to Claims 15 or 16, **characterized in that** a part of the processing unit (25a) is located in the probe.

18. Coordinate measuring machine according to Claims 15 - 17, **characterized in that** the coordinate measuring machine is operated by a cycling unit (31) with a fixed time cycle (T), and **in that** the time signal provided by the timing unit comprises at least one time cycle spacing signal (t_{ab}) which specifies how many time cycles previously the probe has assumed the said position, and comprises a trigger signal (tₜᵣ) which fixes the instant at which the said position lies behind by the number of the time cycles in accordance with the time cycle spacing signal.

19. Coordinate measuring machine according to Claims 14 - 18, in which the optical probe (4) guides the scanning point annularly on a scanning circle (36) with a centre (m), **characterized in that** in order to determine the timing signal in the timing unit there is additionally provided an angle calculating unit (29) which determines from the measured distance values the edge transitions (38, 39, 49a, b) of different scanning circles (36a-36n) with the edge are determined, and there are determined therefrom a multiplicity of temporally dependent angles (τ) which the edge transitions (38, 39, 49a,b) of a scanning circle enclose with the centre (m) of the scanning circle.

20. Coordinate measuring machine according to Claim 19, **characterized in that** the timing signal is determined in the timing unit from the profile of a function (F) approximated to the angles.

21. Coordinate measuring machine according to Claim 14, **characterized in that** the probe is a ring probe.

22. Coordinate measuring machine according to Claim 14 or 21, **characterized in that** the probe is connected to the coordinate measuring machine via a rotary swivelling unit (14).

23. Coordinate measuring machine according to Claim 14, **characterized in that** provided in the processing unit is an averaging unit (33) which determines a mean value (aₘᵢₜ) via a defined number of distance values.

24. Coordinate measuring machine according to Claim 23, **characterized in that** provided in the processing unit is an edge typifying unit (34) which compares the defined mean values with reference value series (R) already present, and qualitatively determines the nature of the edge on the basis of the similarity of the profile of the mean values to one of the reference value series.

25. Coordinate measuring machine according to Claim 23, **characterized in that** provided in the processing unit is an edge typifying unit (34) which calculates a Fourier profile from a defined number of mean values, and which compares the calculated Fourier profile with a multiplicity of already previously stored reference profiles, and determines the nature of the edge on the basis of the similarity of the calculated Fourier profile to one of the reference profiles.

26. Coordinate measuring machine according to Claim 14, **characterized in that** an analyzer (35) subjects some of the stored distance values to Fourier analysis in order thereby to obtain information about the reliability of the edge measurement.

## Revendications

1. Procédé pour mesurer les bordures (13) d'objets (5) à mesurer avec un palpeur optique (4) qui mesure une valeur de l'écart (a) entre le palpeur (4) et la surface de l'objet en un point de palpage (15) réglable, comprenant les étapes de procédé suivantes :
- déplacement du point de palpage (15) le long d'une voie (36a, 36b, ... 36n) sur la bordure (13) de l'objet (5) à mesurer de manière à ce que la bordure de la voie (36a, 36b, ... 36n) soit découpée en une pluralité de points d'intersection cote à cote ;
- enregistrement des valeurs de l'écart mesurées par le palpeur pendant le déplacement et détermination des points d'intersection entre la voie (36a, 36b, ... 36n) et la bordure à partir des valeurs de l'écart,
**caractérisé en ce que**
- précisément un point (P) de la bordure (13) est déterminé à partir des points d'intersection.

2. Procédé selon la revendication 1, avec lequel la détermination du point de la bordure à partir des valeurs de l'écart s'effectue en dérivant au moins un signal de temps (t₁₈₀) qui détermine à quel moment les positions mécaniques (X, Y, Z, α, β) d'un appareil de mesure de coordonnées doivent être prises en compte pour la détermination du point de la bordure.

3. Procédé selon la revendication 2, avec lequel est dérivé précisément un signal de temps destiné à déterminer le point, lequel détermine un moment auquel le palpeur adopte une position parfaitement définie par rapport à la bordure.

4. Procédé selon la revendication 3, avec lequel le signal de temps est déterminé dans le palpeur.

5. Procédé selon la revendication 4, **caractérisé en ce que** l'appareil de mesure de coordonnées fonctionne selon un cycle (T) donné et que ledit signal de temps comprend au moins un signal d'écart de cycle (t_{ab}) qui indique combien de cycles auparavant le palpeur a adopté ladite position et comprend un signal de déclenchement (tₜᵣ) qui détermine le moment auquel la position a été conservée pendant le nombre de cycles selon le signal d'écart de cycle.

6. Procédé selon les revendications 3-5, avec lequel le palpeur optique (4) suit le point de palpage sous la forme d'un anneau sur un cercle de palpage (36) ayant un point central (m), **caractérisé en ce que** pour déterminer le signal de temps, les transitions des bordures (38, 39, 49a, b) de différents cercles de palpage (36a - 36n) sont déterminées avec la bordure à partir des valeurs d'écart mesurées et que de là est déterminée une pluralité d'angles (τ) dépendant du temps qui incluent les transitions de bordure (38, 39, 49a, b) d'un cercle de palpage avec le point central (m) du cercle de palpage.

7. Procédé selon la revendication 6, **caractérisé en ce que** le signal de temps est déterminé à partir de la courbe d'une fonction d'approximation (F) sur l'angle.

8. Procédé selon la revendication 1, **caractérisé en ce que** la voie présente une forme courbée.

9. Procédé selon la revendication 8, **caractérisé en ce que** la voie comprend un cercle (36a) ou une cycloïde.

10. Procédé selon la revendication 1, **caractérisé en ce que** des valeurs moyennes (aₘᵢₜ) sont calculées sur un nombre donné de valeurs de l'écart.

11. Procédé selon la revendication 10, **caractérisé en ce que** la courbe des valeurs moyennes est comparée avec une pluralité de séries de valeurs de référence (R) déjà enregistrées précédemment et que la nature de la bordure est déterminée en fonction de la similitude de la courbe des valeurs moyennes avec l'une des séries de valeurs de référence.

12. Procédé selon la revendication 10, **caractérisé en ce qu'**un profil de Fourier est calculé à partir d'un nombre donné de valeurs moyennes et que le profil de Fourier calculé est comparé avec une pluralité de profils de référence enregistrés précédemment et que la nature qualitative de la bordure peut être déterminée en fonction de la similitude du profil de Fourier calculé avec l'un des profils de référence.

13. Procédé selon la revendication 1, **caractérisé en ce que** des parties des valeurs d'écart enregistrées sont soumises à une analyse de Fourier afin d'obtenir ainsi des informations sur la fiabilité de la mesure de la bordure.

14. Appareil de mesure de coordonnées pour mesurer les bordures (13) d'objets (5), comprenant
- un palpeur optique (4) qui est configuré de telle manière qu'il mesure une valeur de l'écart (a) entre le palpeur et la surface de l'objet en un point de palpage (15) réglable ;
- une commande (27) qui est configurée de telle manière qu'elle déplace le point de palpage le long d'une voie sur la bordure de l'objet de manière à ce que la bordure de la voie (36a, 36b, ... 36n) soit découpée en une pluralité de points d'intersection cote à cote ;
- une unité de traitement (25a, 25b) reliée avec le palpeur optique pour enregistrer les valeurs de l'écart (a) mesurées par le palpeur pendant le déplacement et pour déterminer les points d'intersection entre la voie (36a, 36b, ... 36n) et la bordure à partir des valeurs de l'écart,
**caractérisé en ce que**
- l'unité de traitement est configurée de telle manière qu'elle détermine précisément un point (P) de la bordure à partir de ces points d'intersection.

15. Appareil de mesure de coordonnées selon la revendication 14, **caractérisé en ce que** dans l'unité de traitement est prévue une unité de chronologie (30) qui, pour déterminer le point (P) de la bordure à partir des valeurs de l'écart, dérive au moins un signal de temps (t₁₈₀) qui détermine à quel moment les positions mécaniques (X, Y, Z, α, β) doivent être prises en compte pour la détermination du point de la bordure.

16. Appareil de mesure de coordonnées selon la revendication 15, avec lequel un signal de temps est dérivé avec précision dans l'unité de chronologie, lequel détermine un moment auquel le palpeur adopte une position parfaitement définie par rapport à la bordure.

17. Appareil de mesure de coordonnées selon les revendications 15 ou 16, **caractérisé en ce qu'**une partie de l'unité de traitement (25a) se trouve dans le palpeur.

18. Appareil de mesure de coordonnées selon les revendications 15 à 17, **caractérisé en ce que** l'appareil de mesure de coordonnées fonctionne selon un cycle (T) donné généré par une unité d'horloge (31) et que le signal de temps prévu par l'unité de chronologie comprend au moins un signal d'écart de cycle (t_{ab}) qui indique combien de cycles auparavant le palpeur a adopté ladite position et comprend un signal de déclenchement (tₜᵣ) qui détermine le moment auquel ladite position a été conservée pendant le nombre de cycles selon le signal d'écart de cycle.

19. Appareil de mesure de coordonnées selon les revendications 14 à 18, avec lequel le palpeur optique (4) suit le point de palpage sous la forme d'un anneau sur un cercle de palpage (36) ayant un point central (m), **caractérisé en ce qu'**une unité de calcul de l'angle (29) est prévue en plus dans l'unité de chronologie pour déterminer le signal de temps, laquelle détermine les transitions des bordures (38, 39, 49a, b) des différents cercles de palpage (36a - 36n) avec la bordure à partir des valeurs d'écart mesurées et détermine de là une pluralité d'angles (τ) dépendant du temps qui incluent les transitions de bordure (38, 39, 49a, b) d'un cercle de palpage avec le point central (m) du cercle de palpage.

20. Appareil de mesure de coordonnées selon la revendication 19, **caractérisé en ce que** le signal de temps est déterminé dans l'unité de chronologie à partir de la courbe d'une fonction d'approximation (F) sur l'angle.

21. Appareil de mesure de coordonnées selon la revendication 14, **caractérisé en ce que** le palpeur est un palpeur annulaire.

22. Appareil de mesure de coordonnées selon la revendication 14 ou 21, **caractérisé en ce que** le palpeur est relié à l'appareil de mesure de coordonnées par le biais d'une unité orientable (14).

23. Appareil de mesure de coordonnées selon la revendication 14, **caractérisé en ce que** dans l'unité de traitement est prévue une unité de calcul de la moyenne (33) qui détermine une valeur moyenne (aₘᵢₜ) sur un nombre donné de valeurs de l'écart.

24. Appareil de mesure de coordonnées selon la revendication 23, **caractérisé en ce que** dans l'unité de traitement est prévue une unité de caractérisation de la bordure (34) qui compare les valeurs moyennes déterminées avec des séries de valeurs de référence (R) déjà existantes et détermine la nature qualitative de la bordure en fonction de la similitude de la courbe des valeurs moyennes avec l'une des séries de valeurs de référence.

25. Appareil de mesure de coordonnées selon la revendication 23, **caractérisé en ce que** dans l'unité de traitement est prévue une unité de caractérisation de la bordure (34) qui calcule un profil de Fourier à partir d'un nombre donné de valeurs moyennes et qui compare le profil de Fourier calculé avec une pluralité de profils de référence déjà enregistrés préalablement et détermine la nature de la bordure en fonction de la similitude du profil de Fourier calculé avec l'un des profils de référence.

26. Appareil de mesure de coordonnées selon la revendication 14, **caractérisé en ce qu'**un analyseur (35) soumet des parties des valeurs d'écart enregistrées à une analyse de Fourier afin d'obtenir ainsi des informations sur la fiabilité de la mesure de la bordure.
